# EUROPEAN PATENT SPECIFICATION

(11) **EP 1 113 478 B1**
(45) Date of publication and mention of the grant of the patent: **25.08.2004**
(21) Application number: 00311732.2
(22) Date of filing: 28.12.2000
(51) Int. Cl.: H01J 3/02, H01J 1/304

(54) **Triode structure field emission device**
Feldemissionsvorrichtung mit Triodenstruktur
Dispositif d'émission de champ à structure triode

(30) Priority: 30.12.1999 KR 9966031
(43) Date of publication of application: 04.07.2001
(73) Proprietor: Samsung SDI Co., Ltd., Suwon-Si, Kyungki-do (KR)
(72) Inventor: Choi, Yong-soo, Kwanak-gu, Seoul (KR); Choi, Jun-hee, Padal-gu,Suwon-city, Kyungki-do (KR); Lee, Nae-sung, Seoul (KR); Kim, Jong-min, Paldal-gu, Suwon-city, Kyungki-do (KR)
(74) Representative: Exell, Jonathan Mark

(56) References cited:
- EP-A- 1 210 721
- US-A- 3 671 798
- US-A- 5 772 904
- PATENT ABSTRACTS OF JAPAN vol. 1999, no. 01, 29 January 1999 (1999-01-29) & JP 10 289650 A (SONY CORP), 27 October 1998 (1998-10-27)
- PATENT ABSTRACTS OF JAPAN vol. 1998, no. 14, 31 December 1998 (1998-12-31) & JP 10 255644 A (CANON INC), 25 September 1998 (1998-09-25)

## Description

The present invention relates to a triode structure field emission device, e.g. using carbon nanotubes that is a low voltage field emission material and a driving method thereof.

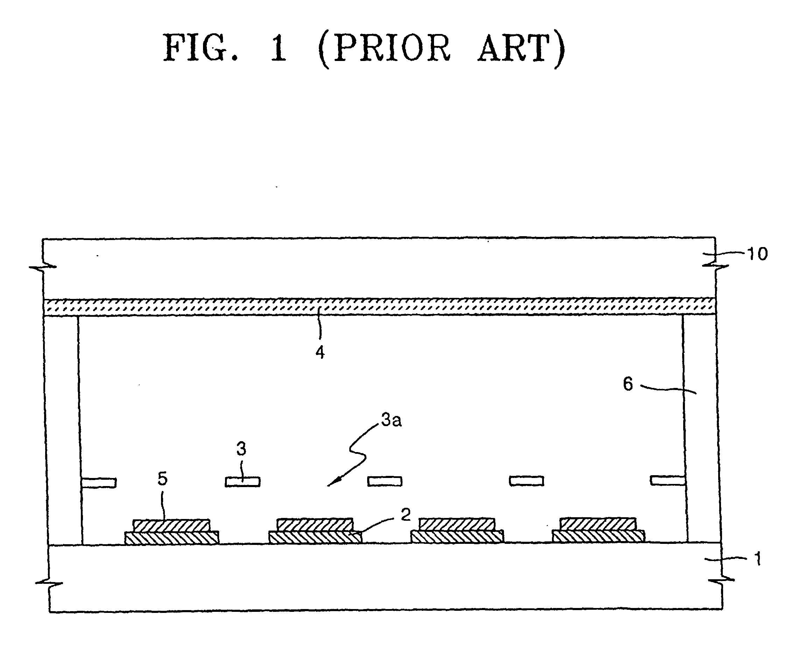

FIG. 1 is a cross-sectional view schematically illustrating the structure of a conventional triode field emission device using a field emission material. As shown in FIG. 1, the conventional triode field emission device includes a rear substrate 1 and a front substrate 10 which face each other having an interval of the length of a spacer 6. Cathodes 2 on each of which a field emission material 5 is formed, gates 3 and anodes 4 are included as electron emission sources between the two substrates. The cathodes 2 are disposed on the rear substrate 1 in parallel strips, and the anodes 4 are disposed on the front substrate 10 in parallel strips to cross with the cathodes 2. The gates 3 are disposed in parallel strips to cross with the cathodes 2 so that they are arranged straightly over the anodes 4. A field emission material 5 and an aperture 3a are formed at places where the cathodes 2 cross with the gates 3. That is, the electron emission materials 5 are coated on the intersections on the cathodes 2, and apertures 3a are formed at the intersections on the gates 3, that is, at the positions on the gates 3 which correspond to the field emission materials, such that electrons emitted from the field emission materials 5 flow into the anodes 4.

As described above, field emission devices have a diode structure made up of cathodes and anodes, or a triode structure in which gates are interposed between cathodes and anodes, such that the amount of electron emitted from the cathodes is controlled. Structures in which carbon nanotubes rather than existing metal tips are applied as electron emission sources formed on cathodes have been recently attempted due to the advent of carbon nanotubes, which serve as a new field emission material. Carbon nanotubes have a large aspect ratio (which is greater than 100), electrical characteristics having conductivity such as conductors, and stable mechanical characteristics, so that they are receiving much attention of research institutions to employ them as the electron emission sources for field emission devices. Diode structure field emission devices using carbon nanotubes can be manufactured by a typical method. However, diode structure field emission devices have a trouble in controlling emitted current, in spite of the easiness of the manufacture, so that it is difficult to realize moving pictures or gray-scale images. Triode structure field emission devices using carbon nanotubes can be manufactured in consideration of installation of gate electrodes right on cathodes and installation of a grid-shaped metal sheet. The former field emission devices has difficulty in coupling carbon nanotubes to cathodes because of the arrangement of gates. The latter field emission devices have problems in that the manufacture is complicated, and control voltage increases.

In the present invention, a triode field emission device is used in which location of gate electrodes under cathodes facilitates the control of emitted current, and it is easy to coat the cathodes with a field emission material. The present invention also relates to a driving method thereof.

WO 01/18838 was published after the priority date of the present application and has one of its two priority dates before the priority date of the present application. It describes a field emission flat screen with crossed electrodes on opposed substrates, and pairs of modulating electrodes under and on either side of each of the electrodes on one of the substrates.

JP 10-289650 describes a field emission element sandwiched between pairs of gate electrodes.

According to the claims, there is provided a triode field emission device including: a rear substrate and a front substrate which face each other at a predetermined gap; spacers for vacuum sealing the space formed by the two substrates while maintaining the gap between the two substrates; cathodes and anodes on the facing surfaces of the two substrates; electron emission sources formed on the portions of the cathodes at the intersections of the cathodes and the anodes; and gates for controlling electrons emitted from the electron emission sources, wherein the gates are arranged as set out in claims 1 and 15.

The gate is formed like a full surface or disposed as parallel strips on the rear substrate to cross with the cathodes so that the gates are located straightly over the anodes.

It is preferable that the electron emission sources are formed on the cathodes at the intersections of the cathodes and anodes, of at least one material selected from the group consisting of a metal, diamond and graphite, or a mixture of the selected material with a conductive material, a dielectric material or an insulative material.

Preferably, the electron emission sources are formed straight on the entire surface or one edge of cathodes at the intersections of the cathodes and gates, and the electron emission sources are formed around at least one hole pierced in the cathodes at the intersections of the cathodes and gates.

In the present invention, the electron emission sources are formed by a steps from one or more of a printing method, an electrophoretic method and a vapor deposition method. It is also preferable that, when three or more holes are formed, a middle hole is formed to a dominant size, and a field emission material is formed around the outer circumference of each of the holes, so that the uniformity of emission current within a pixel is increased.

According to the claims, there is provided a method of driving a triode field emission device including: a rear substrate and a front substrate which face each other at a predetermined gap; spacers for vacuum sealing the space formed by the two substrates while maintaining the gap between the two substrates; cathodes and anodes arranged in strips on the facing surfaces of the two substrates so that the cathodes cross with the anodes; electron emission sources formed on the portions of the cathodes at the intersections of the cathodes and the anodes; and gates for controlling electrons emitted from the electron emission sources, wherein the gates are arranged on the rear substrate under the cathodes to cross with the cathodes so that the gates are located straightly over the anodes or one single gate formed like a full surface on the substrate below the cathodes, and an insulative layer for electrical insulation is formed between the gates and the cathodes, the method including controlling current flowing between the cathodes and the anodes by controlling the gate voltage.

Preferably, the electron emission sources are formed of at least one material selected from the group consisting of carbon nanotube, a metal, diamond and graphite, on the cathodes at the intersections of the cathodes and gates. Alternatively, the electron emission sources are formed of a mixture of a conductive material, a dielectric material or an insulative material with at least one material selected from the group consisting of carbon nanotube, a metal, diamond and graphite, on the cathodes at the intersections of the cathodes and the gates.

It is preferable that the electron emission sources are formed straight on the entire surface or one edge of cathodes at the intersections of the cathodes and gates.

Alternatively, it is preferable that the electron emission sources are formed around at least one hole pierced in the cathodes at the intersections of the cathodes and anodes.

Examples of the present invention will now be described in detail, with reference to the accompanying drawings in which:
FIG. 1 is a vertical cross-sectional view schematically illustrating the structure of a triode field emission device using a conventional field emission material;
FIG. 2 is a vertical cross-sectional view schematically illustrating the structure of a triode field emission device using a field emission material according to the present invention;
FIG. 3 is a view illustrating an embodiment of the triode field emission device using a field emission material of FIG. 2, in which the field emission material is formed on the edge of cathodes at the intersections of the cathodes and gates;
FIGS. 4A through 4D are views illustrating embodiments of the triode field emission device using a field emission material of FIG. 2, in which the field emission material is formed around at least one hole pierced on the edge of cathodes at the intersections of the cathodes and gates;
FIGS. 5A and 5B are curves illustrating an equipotential line distribution and a field distribution with respect to a gate voltage in the field emission device of FIG. 2 in which the gap between cathodes is 60 µm, an anode voltage is 500V, the gap between a cathode and an anode is 200 µm, and the gaps (h) between cathodes and gates are identical;
FIGS. 6A and 6B are graphs showing variations in edge field strength and deviation, respectively, with respect to voltages applied to gates in the field emission device of FIG. 2 in three cases of the gap (h) between a cathode and a gate being 5 µm, 10 µm and 15 µm with the gap between cathodes of 60 µm, an anode voltage 500V, and the gap between a cathode and an anode of 200 µm;
FIGS. 7 through 9 show the electrical characteristics with respect to variations in gate voltage when an anode voltage is 400V, in an embodiment of the field emission device of FIG. 2 manufactured so that the gap between a cathode and an anode is 1.1mm, wherein FIGS. 7 and 8 are graphs showing the anode current and the Fowler-Nordheim plot value, respectively, with respect to variations in gate voltage, and FIG. 9 is a picture of the brightness of the above actually-manufactured field emission device when half of a substrate is gated on while the remaining half is gated off;
FIGS. 10A through 11B are graphs and pictures with respect to a field emission device in which the gap between a cathode and an anode is 200 µm, and cathodes are coated with a paste obtained by mixing Ag and carbon nanotubes;
FIG. 12 is a picture with respect to a triode field emission device in which the gap between a cathode and an anode is 1.1mm, and cathodes are coated with a paste obtained by mixing glass and carbon nanotubes; and,
FIGS. 13A and 13B are pictures of the brightness of a triode field emission device in two cases, that is, when insulative layers between gates and cathodes are formed in strips along the cathodes, and when the insulative layer is formed in the form of a plane, respectively.

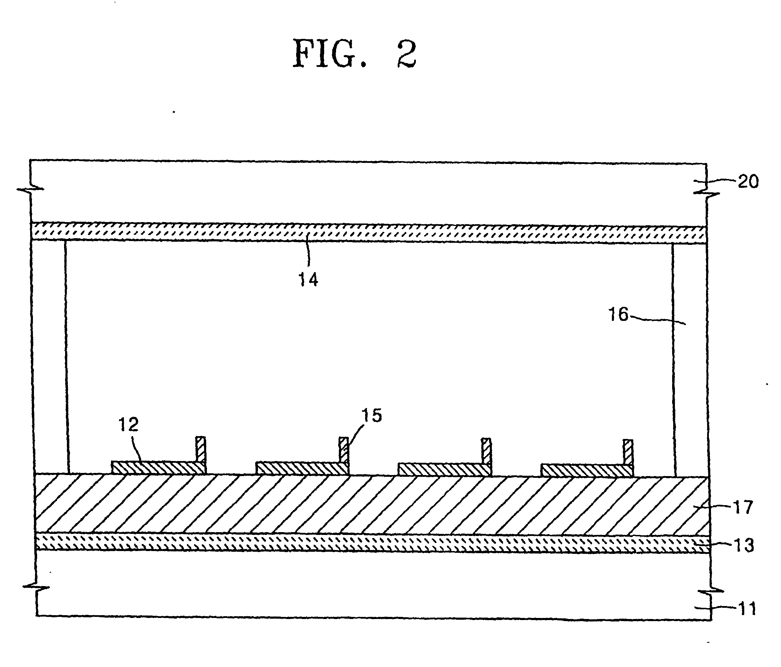

FIG. 2 is a cross-sectional view schematically illustrating the structure of a triode field emission device using carbon nanotubes according to the present invention. As shown in FIG. 2, the triode field emission device according to the present invention includes a rear substrate 11 and a front substrate 20 which face each other at the interval corresponding to the length of a spacer 16. Anodes 14 and cathodes 12 on each of which an electron emission source 15 made of carbon nanotube, metal, diamond or graphite is partially formed, and anodes 14, are formed as electron emission sources between the two substrates. Gates 13 are formed below an insulative layer 17 formed below the cathodes 12. The gates 13 are formed like a full surface on the rear substrate 11 or disposed in parallel strips thereon. The insulative layer 17 is formed on the rear substrate 11 on which the gates 13 are formed. When the gates 13 are formed in strips not like a full surface, the cathodes 12 are disposed in parallel strips in the direction of crossing with the gates 13. The anodes 14 are disposed in parallel strips on the cathode-facing surface of the front substrate 20 so that they cross with the anodes 12, that is, so that they are arranged in parallel with the gates 13 straightly over the gates 13. Electron emission sources 15 made of carbon nanotube, metal, diamond or graphite are formed on the cathodes 12 at the intersections of the cathodes 12 and the gates 13.

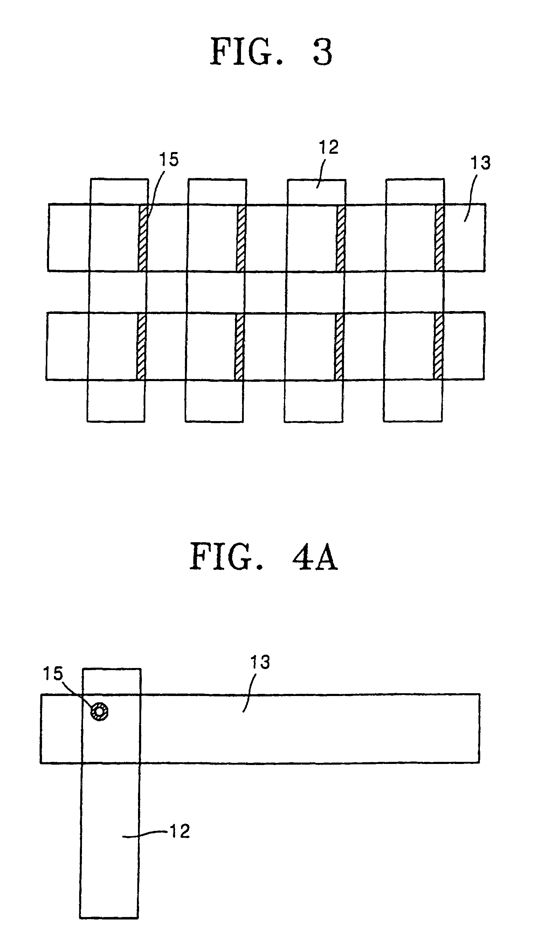

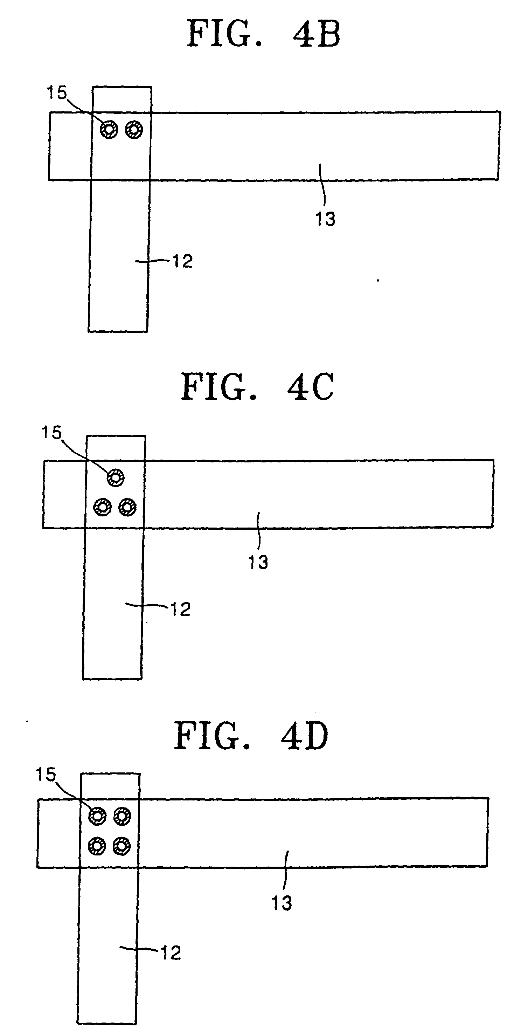

The electron emission sources 15 can be locally formed on the edge of the cathodes 12 at the intersections with the gates 13 (or anodes), as shown in FIG. 3, or formed on the entire surface of the cathodes 12. Alternatively, as shown in FIGS. 4A through 4D, the electron emission sources 15 can be locally formed around at least one hole pierced in the cathodes 12 at the intersections with the gates 13 (or anodes). As described above, the electron emission sources 15 can be formed at any positions on the cathodes at the intersections with the gates. However, the formation of the electron emission sources 15 on the edge of the cathodes has an advantage in that the strongest field is experimentally formed at the edge thereof. The electron emission sources 15 formed on the cathodes 12 can have any width compared to the line width of the cathodes 12.

FIG. 3 illustrates the case where a field emission material 15 is linearly coated on one edge of a cathode 12 at the intersection with a gate 13. FIGS. 4A through 4D illustrate the four cases where one, two, three and four holes are pierced in a cathode 12 at the intersection with a gate 13, respectively, wherein an electron emission source 15 is circularly formed around each of the holes. Here, the electron emission source 15 can also be formed in different shapes. In particular, when three or more holes are formed, a hole to be positioned in the middle is formed to a dominant size, and, preferably, a field emission material is formed around the outer circumference of each of the holes, so that the uniformity of emission current within a pixel is increased. The number of circular or different-shaped field emission material figures is controlled to obtain the maximum uniform electron emission effect at the minimum power, according to all of the conditions such as the standards such as the gap between cathodes, the gap between a cathode and a gate, and the gap between a cathode and an anode, the material of an insulative layer, and a voltage applied to each electrode.

The insulative layer 17, which insulates the gate electrode 13 from the cathode 12, can be formed in a plane or in lines along the lines of the cathodes 12. Here, when the insulative layer 17 is linearly formed, the line width of the insulative layer 17 can be equal to or larger than that of the cathode 12.

As described above, in the field emission device according to the present invention having a triode structure by which emitted current is easily controlled, gate electrodes are placed under cathodes in order to easily form electron emission materials serving as electron emission sources on the cathodes. Also, emitted current can be controlled with low voltage by field emission at the edge of cathodes, and the uniformity of emitted current can be improved by the formation of various patterns.

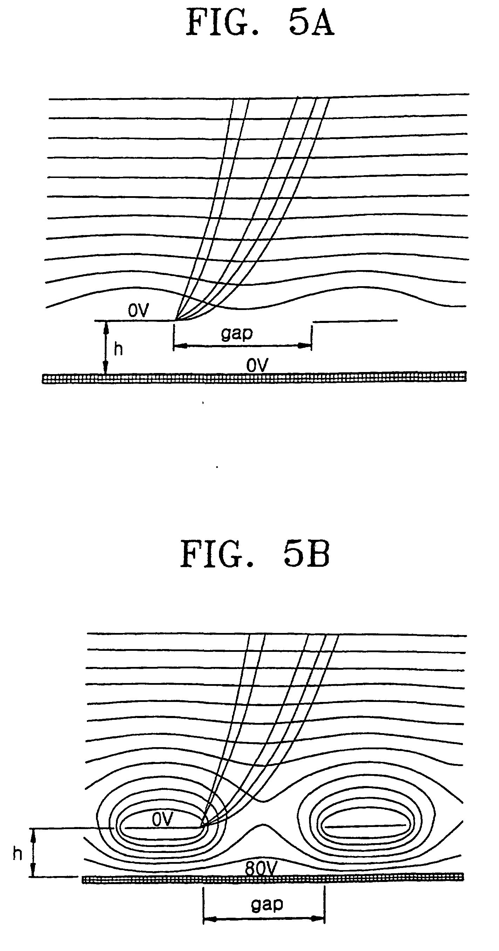

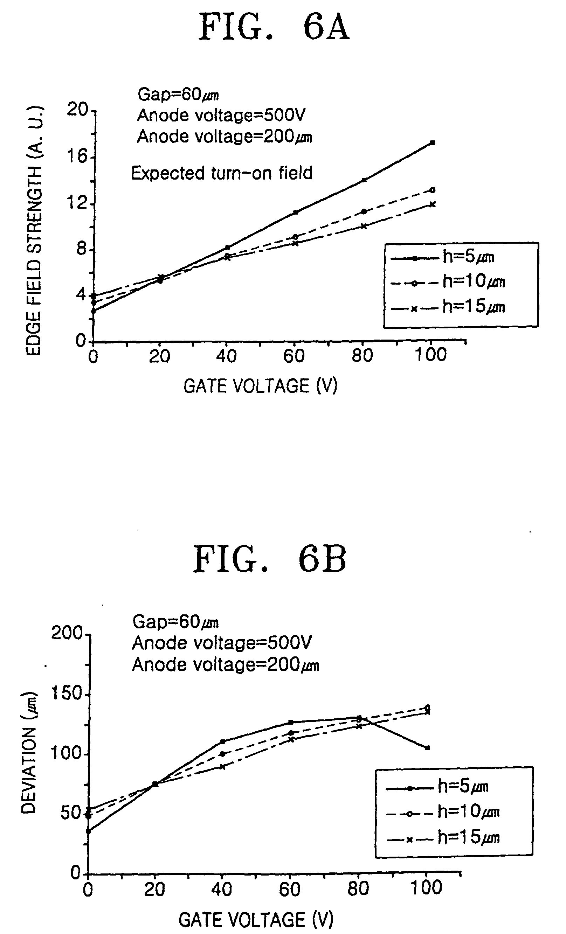

Furthermore, the gate electrodes are formed below an insulative layer formed below the cathodes, so that, if an appropriate amount of voltage is applied to the gate electrodes, an electrical field caused by the gate voltage transmits the insulative layer, and thus a strong electrical field is formed in electron emission sources. Thus, electrons are emitted by the field emission. The emitted electrons are moved toward anodes by an additional electrical field formed by an anode voltage, and serve as their functions. Curves representing an equipotential line distribution and a field distribution (an electron emission path) with respect to a gate voltage are shown FIGS. 5A and 5B. The curves are the results obtained by simulating the case that the gap between cathodes is 60 µm, an anode voltage is 500V, the gap between a cathode and an anode is 200 µm, and the gaps (h) between cathodes and gates are identical. Here, FIG. 5A refers to the case when 0V is applied to gates, and FIG. 5B refers to the case when 80V is applied to the gates. Referring to the equipotential line distribution, when the gate voltage is high, that is, when 80V is applied to the gates, the gap between equipotential lines is more narrow near cathodes than at the other portions, which means that the field strength around the cathodes is higher than that in the other portions. This infers that a greater number of electrons are emitted near the cathodes than at the other portions, as can be seen from the simulation results shown in FIGS. 6A and 6B.

FIGS. 6A and 6B are graphs showing variations in edge field strength and horizontal deviation of emitted electrons from emission points, respectively, with respect to voltages applied to gates, in three cases of the gap (h) between a cathode and a gate being 5 µm, 10 µm and 15 µm with the gap between cathodes of 60 µm, an anode voltage 500V, and the gap between a cathode and an anode of 200 µm as described above. As shown in FIG. 6A, the edge field strength increases as the gate voltage increases. FIG. 6B is a graph showing a deviation of electrons emitted from the edge of cathodes, with variations in gate voltage, the deviation measured from a position over anodes.

### < First embodiment>

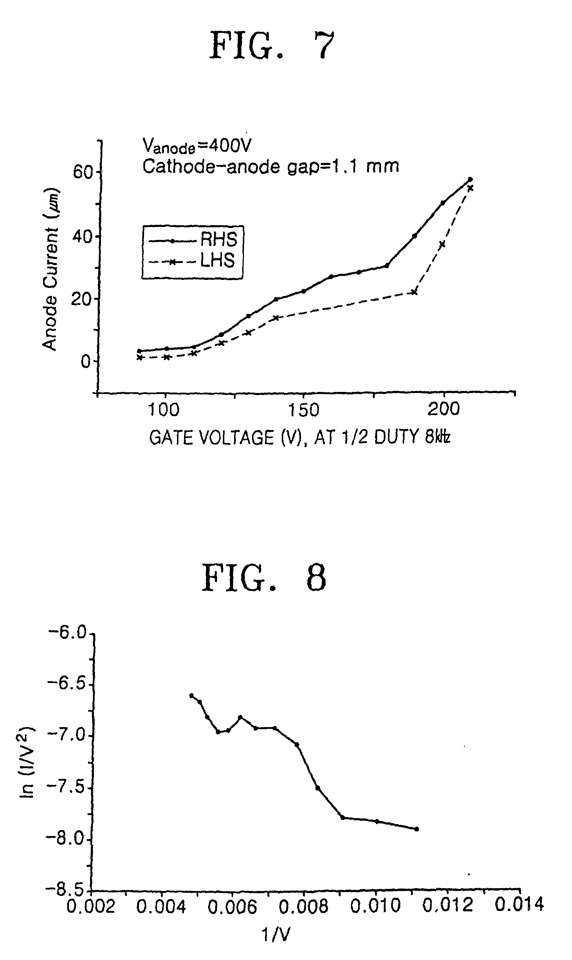

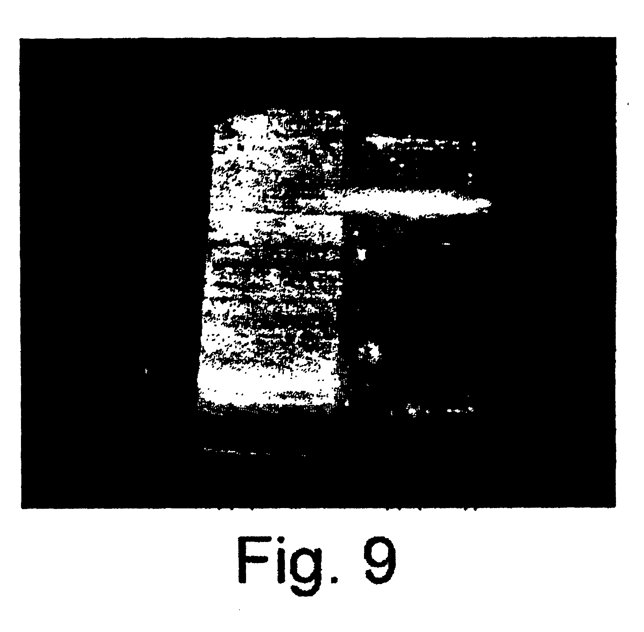

FIGS. 7 through 9 show the electrical characteristics with respect to variations in gate voltage when an anode voltage is 400V, in a field emission device according to the present invention manufactured so that the gap between a cathode and an anode is 1. 1mm. Here, FIGS. 7 and 8 are graphs showing the anode current and the Fowler-Nordheim plot value, respectively, with respect to variations in gate voltage, and FIG. 9 is a picture of the brightness of the above actually-manufactured field emission device when half of a substrate is gated on while the remaining half is gated off. In FIG. 7, RHS denotes the right hand side, and LHS denotes the left hand side. FIG. 7 refers to the case when only the right half of a substrate is gated on and the case when only the left half of a substrate is gated on. In FIG. 8, which shows the Fowler-Norheim plot of FIG. 7, measured current is interpreted as current generated by field emission if data points exist on a line.

### < Second embodiment>

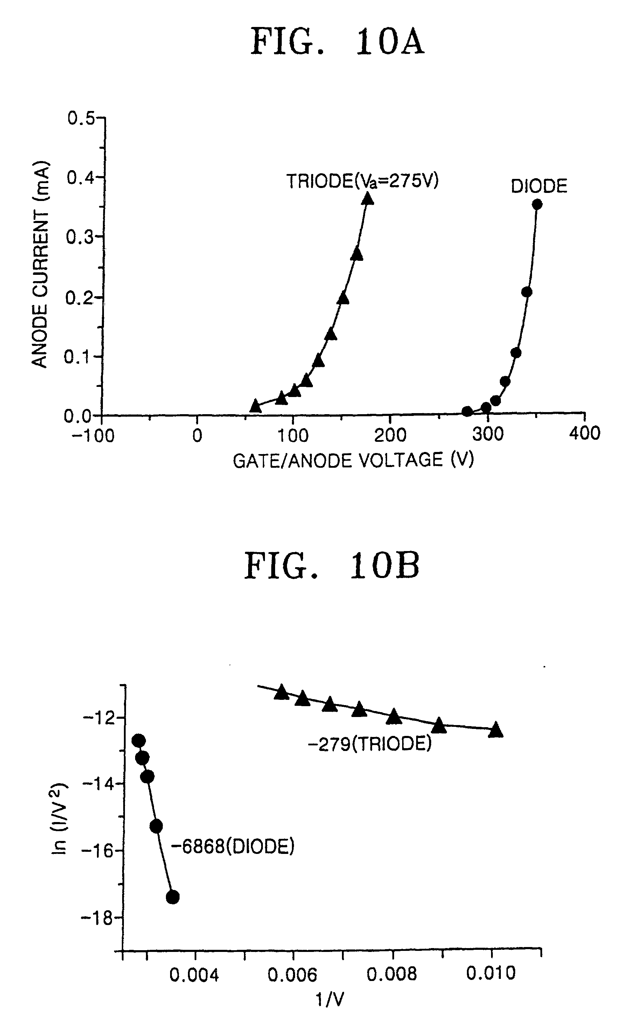

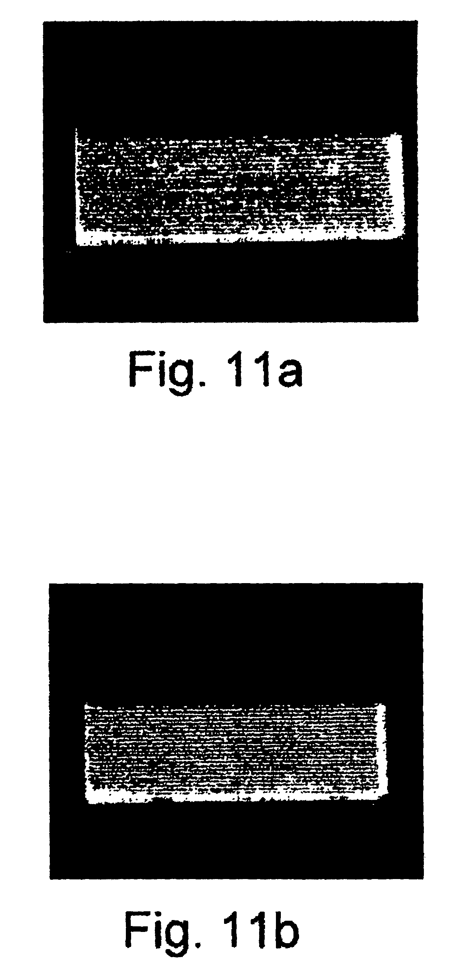

FIGS. 10A through 11B are graphs and pictures with respect to a field emission device according to the present invention manufactured so that the gap between a cathode and an anode is 200 µm, in which a paste obtained by mixing Ag and carbon nanotubes is printed on cathodes to serve as electron emission sources. Here, FIG. 10A shows the intensity of anode current with variations in gate voltage, and FIG. 10B is a graph showing the Fowler-Norheim plot of FIG. 7. FIG. 11A is a picture of the brightness of a diode field emission device when an anode voltage is 500V, and FIG. 11B is a picture of the brightness of a triode field emission device at a gate voltage of 120V, when anodes are biased by 250V.

### < Third embodiment>

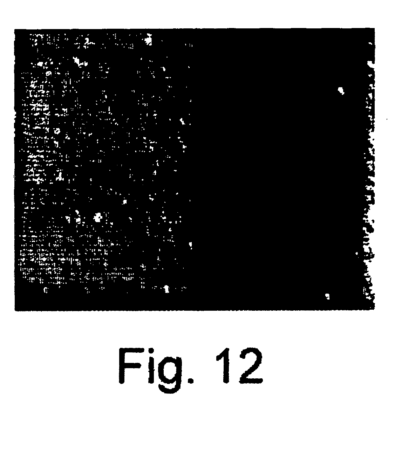

FIG. 12 is a picture with respect to a triode field emission device according to the present invention manufactured so that the gap between a cathode and an anode is 1.1mm, in which a paste obtained by mixing glass and carbon nanotubes is printed on the cathodes to serve as electron emission sources. Here, an anode voltage is DC 700V, and a gate voltage is AC 300V (130Hz, 1/100 duty). FIG. 12 refers to the case when only the left half of a substrate is gated on.

### < Fourth embodiment>

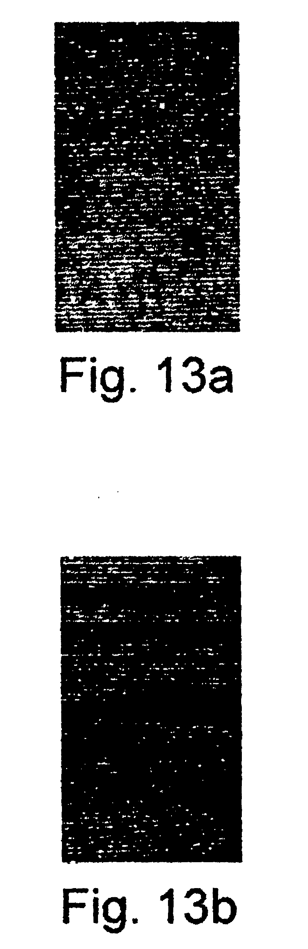

FIGS. 13A and 13B are pictures of the brightness of a triode field emission device in two cases, that is, when insulative layers between gates and cathodes are formed in strips along the cathodes, and when the insulative layer is formed in a plane, respectively. In the two cases, an anode voltage is DC 500V. As shown in FIG. 13A, in the case when the insulative layer is linearly formed, the uniformity of field emission is improved, and an operation voltage (which is 160V in the case of linear formation of the insulative layer, or 240V in the case of blanket formation of the insulative layer) increases.

In the manufacture of this field emission device, first, gate electrode lines in strips are formed on a substrate, and then an insulating material having a constant thickness (about several to several tens of µm) is entirely or locally coated on the gate electrode lines. Next, cathode lines are formed on the insulative layer to cross with the gate electrodes. Then, carbon nanotubes are coupled to the edge of each of the cathodes at the dot area where the gate electrodes are overlapped by the cathodes, by a printing method, an electrophoretic method or a vapor deposition method. Alternatively, carbon nanotubes are formed around holes pierced in the dot area where the gate electrodes are overlapped by the cathodes. Thereafter, anodes and the resultant substrate are vacuum sealed using spacers by a typical method.

As described above, in a triode field emission device using carbon nanotubes according to the present invention, gate electrodes serving to take electrons out of carbon nanotubes on cathodes are installed below the cathodes on a substrate, so that the manufacture of the devices is easy. However, in all existing triode electron emission devices, gate electrodes are interposed between cathodes and anodes. In the present invention, the gate electrodes are formed below an insulative layer formed below the cathodes, so that, if an appropriate amount of voltage is applied to the gate electrodes, an electrical field caused by the gate voltage transmits the insulative layer, and thus a strong electrical field is formed in carbon nanotubes. Thus, the carbon nanotubes can control the emission of electrons due to the field emission. The emitted electrons are moved toward anodes by an additional electrical field formed by an anode voltage, and serve as their functions. Field emission devices having such a structure can be simply manufactured by present techniques, and driven at low voltage and enlarged because of the use of carbon nanotubes as electron emission sources. Therefore, these field emission devices receive much attention for their potential to serve as next-generation flat display devices.

## Claims

1. A triode field emission device comprising:
a rear substrate (11) and a front substrate (20) which face each other at a predetermined gap;
spacers (16) for vacuum sealing the space formed by the two substrates (11, 20) while maintaining the gap between the two substrates;
cathodes (12) and anodes (14) arranged in strips on the facing surfaces of the two substrates so that the cathodes cross with the anodes;
electron emission sources (15) formed on the portions of the cathodes at the intersections of the cathodes and the anodes; and
one gate (13) for controlling electrons emitted from the electron emission sources, wherein the gate (13) is arranged on an entire surface of the rear substrate under the cathodes (12); and
an insulative layer (17) for electrical insulation is formed between the gates and the cathodes.

2. A triode field emission device according to claim 1, wherein the electron emission sources (15) are formed of at least one material selected from the group consisting of a metal, diamond and graphite, and carbon nano tubes on the cathodes at the intersections of the cathodes and anodes.

3. A triode field emission device according to claim 1 or 2, wherein the electron emission sources (15) are formed of a mixture of a conductive material, a dielectric material or an insulative material, and at least one material selected from the group consisting of carbon nanotubes, a metal, diamond and graphite, on the cathodes at the intersections of the cathodes and the anodes.

4. A triode field emission device according to claim 2, wherein the electron emission sources (15) are formed straight on the entire surface or one edge of cathodes (12) at the intersections of the cathodes (12) and anodes.

5. A triode field emission device according to claim 2, wherein the electron emission sources (15) are formed around at least one hole pierced in the cathodes at the intersections of the cathodes and anodes.

6. A triode field emission device according to claim 2, wherein the electron emission sources (15) are formed by a method among a printing method, an electrophoretic method and a vapor deposition method.

7. A triode field emission device according to claim 5, wherein, when three or more holes are formed, a middle hole is formed as large as possible, and a field emission material is formed around the outer circumference of each of the holes, so that the uniformity of emission current within a pixel is increased.

8. A triode field emission device according to any preceding claim, wherein the insulative layer (17) is formed in a blanket or linearly formed along the lines of the cathodes.

9. A method of driving a triode field emission device including a rear substrate (11) and a front substrate (20) which face each other at a predetermined gap, spacers (16) for vacuum sealing the space formed by the two substrates while maintaining the gap between the two substrates, cathodes (12) and anodes (14) arranged in strips on the facing surfaces of the two substrates so that the cathodes (12) cross with the anodes (14), electron emission sources (15) formed on the portions of the cathodes at the intersections of the cathodes (12) and the anodes (14), to serve as electron emission sources and one gate (13) for controlling electrons emitted from the electron emission sources, wherein the gate (13) is arranged on an entire surface of the rear substrate (11) under the cathodes (12) and an insulative layer for electrical insulation is formed between the gates (17) and the cathodes, the method comprising the step of controlling current flowing between the cathodes (12) and the anodes (14) by controlling the gate voltage.

10. A method according to claim 9, wherein the electron emission sources (15) are formed of at least one material selected from the group consisting of carbon nanotube, a metal, diamond and graphite, on the cathodes at the intersections of the cathodes and the gate.

11. A method according to claim 9, wherein the electron emission sources (15) are formed of a mixture of a conductive material, a dielectric material or an insulative material, and at least one material selected from the group consisting of carbon nanotube, a metal, diamond and graphite, on the cathodes at the intersections of the cathodes and the gate.

12. A method according to claim 9, wherein the insulative layer (17) is formed in a blanket or linearly formed along the lines of the cathodes.

13. A method according to claim 10, wherein the electron emission sources (15) are formed straight on the entire surface or one edge of cathodes at the intersections of the cathodes and anodes.

14. A method according to claim 10, wherein the electron emission sources (15) are formed around at least one hole pierced in the cathodes at the intersections of the cathodes and anodes.

15. A triode field emission device comprising:
a rear substrate (11) and a front substrate (20) which face each other at a predetermined gap;
spacers (16) for vacuum sealing the space formed by the two substrates while maintaining the gap between the two substrates;
cathodes (12) and anodes (14) on the facing surfaces of the two substrates;
electron emission sources (15) formed on the portions of the cathodes at the intersections of the cathodes and the anodes; and
gates (13) for controlling electrons emitted from the electron emission sources;
wherein the gates (13) are arranged in strips on the rear substrate (11) under the cathodes (12) to perpendicularly cross the cathodes (12); and
an insulative layer (17) for electrical insulation is formed between the gates and cathodes.

16. A triode field emission device as claimed in claim 15 wherein the electron emission sources (15) are formed on the portions of the cathodes at the intersections of the cathodes and gates.

17. A triode field emission device according to claim 15 or 16, wherein the electron emission sources (15) are formed of at least one material selected from the group consisting of a metal, diamond and graphite, and carbon nano tubes on the cathodes at the intersections of the cathodes and gates.

18. A triode field emission device according to claim 17, wherein the electron emission sources (15) are formed of a mixture of a conductive material; a dielectric material or an insulative material, and at least one material selected from the group consisting of carbon nanotubes, a metal, diamond and graphite, on the cathodes at the intersections of the cathodes and the gates.

19. A triode field emission device according to claim 18, wherein the electron emission sources (15) are formed straight on the entire surface or one edge of cathodes (12) at the intersections of the cathodes (12) and gates.

20. A triode field emission device depending on any of claims 17 to 19, wherein the electron emission sources (15) are formed by a method among a printing method, an electrophoretic method and a vapor deposition method.

21. A method of driving a triode field emission device including a rear substrate (11) and a front substrate (20) which face each other at a predetermined gap, spacers (16) for vacuum sealing the space formed by the two substrates while maintaining the gap between the two substrates, cathodes (12) and anodes (14) arranged on the facing surfaces of the two substrates, electron emission sources (15) formed on the portions of the cathodes at the intersections of the cathodes (12) and the anodes (14), to serve as electron emission sources and a gate (13) for controlling electrons emitted from the electron emission sources, wherein the gate (13) is arranged in stripes on the substrate (11) under the cathodes (12) to perpendicularly cross the cathodes (12), and an insulative layer for electrical insulation is formed between the gates (17) and the cathodes, the method comprising the step of controlling current flowing between the cathodes (12) and the anodes (14) by controlling the gate voltage.

22. A method according to claim 21, wherein the electron emission sources (15) are formed of at least one material selected from the group consisting of carbon nanotube, a metal, diamond and graphite, on the cathodes at the intersections of the cathodes and gates.

23. A method according to claim 21, wherein the electron emission sources (15) are formed of a mixture of a conductive material, a dielectric material or an insulative material, and at least one material selected from the group consisting of carbon nanotube, a metal, diamond and graphite, on the cathodes at the intersections of the cathodes and the gates.

24. A method according to claim 22, wherein the insulative layer (17) is formed in a blanket or linearly formed along the lines of the cathodes.

25. A method according to claim 22, 23 or 24, wherein the electron emission sources (15) are formed straight on the entire surface or one edge of cathodes at the intersections of the cathodes and gates.

26. A method according to claim 22, 23, 24 or 25, wherein the electron emission sources (15) are formed around at least one hole pierced in the cathodes at the intersections of the cathodes and gates.

## Patentansprüche

1. Feldemissionsvorrichtung mit Triodenstruktur umfassend:
einen hinteres Substrat (11) und ein vorderes Substrat (20), die einander in einem bestimmten Spalt zugewandt sind;
Abstandhalter (16) zur Vakuumversiegelung des durch die beiden Substrate (11, 20) gebildeten Raums, während der Spalt zwischen den beiden Substraten beibehalten wird;
Kathoden (12) und Anoden (14), die in Streifen auf den zugewandten Flächen der beiden Substrate angeordnet sind, so dass die Kathoden sich mit den Anoden kreuzen;
Elektronenemissionsquellen (15), die auf den Teilen der Kathoden an den Schnittstellen der Kathoden und der Anoden ausgebildet sind; und
ein Gate (13) zum Steuern der aus den Elektronenemissionsquellen emittierten Elektronen, worin das Gate (13) auf einer ganzen Fläche des hinteren Substrats unter den Kathoden (12) angeordnet ist; und
eine Isolierschicht (17) zur elektrischen Isolation ist zwischen den Gates und den Kathoden ausgebildet.

2. Feldemissionsvorrichtung mit Triodenstruktur nach Anspruch 1, worin die Elektronenemissionsquellen (15) aus mindestens einem Material ausgewählt aus der Gruppe bestehend aus einem Metall, Diamant und Graphit und Kohlenstoffnanoröhrchen auf den Kathoden an den Schnittstellen der Kathoden und Anoden gebildet sind.

3. Feldemissionsvorrichtung mit Triodenstruktur nach Anspruch 1 oder 2, worin die Elektronenemissionsquellen (15) aus einer Mischung aus einem leitfähigen Material, einem dielektrischen Material oder einen isolierenden Material und mindestens einem Material ausgewählt aus der Gruppe bestehend aus Kohlenstoffnanoröhrchen, einem Metall, Diamant und Graphit auf den Kathoden an den Schnittstellen der Kathoden und Anoden gebildet sind.

4. Feldemissionsvorrichtung mit Triodenstruktur nach Anspruch 2, worin die Elektronenemissionsquellen (15) direkt auf der gesamten Fläche oder auf einer Kante der Kathoden (12) an den Schnittstellen der Kathoden (12) und Anoden gebildet sind.

5. Feldemissionsvorrichtung mit Triodenstruktur nach Anspruch 2, worin die Elektronenemissionsquellen (15) um mindestens einen in die Kathoden an den Schnittstellen der Kathoden und Anoden gestochenen Durchtritt gebildet sind.

6. Feldemissionsvorrichtung mit Triodenstruktur nach Anspruch 2, worin die Elektronenemissionsquellen (15) nach einem Verfahren unter einem Druckverfahren, einem elektrophoretischen Verfahren und einem Aufdampfverfahren gebildet sind.

7. Feldemissionsvorrichtung mit Triodenstruktur nach Anspruch 5, worin, wenn drei oder mehr Durchtritte ausgebildet sind, ein mittlerer Durchtritt so groß wie möglich ausgebildet ist, und ein Feldemissionsmaterial um den Außenumfang jedes der Durchtritte gebildet ist, so dass die Gleichmäßigkeit des Emissionsstroms in einem Pixel erhöht ist.

8. Feldemissionsvorrichtung mit Triodenstruktur nach einem der vorhergehenden Ansprüche, worin die Isolierschicht (17) in einer Decke gebildet ist oder linear entlang der Kathodenlinien gebildet ist.

9. Verfahren zum Betreiben einer Feldemissionsvorrichtung mit Triodenstruktur enthaltend ein hinteres Substrat (11) und ein vorderes Substrat (20), die einander in einem bestimmten Spalt zugewandt sind, Abstandhalter (16) zur Vakuumversiegelung des durch die beiden Substrate gebildeten Raums, während der Spalt zwischen den beiden Substraten beibehalten wird, Kathoden (12) und Anoden (14), die in Streifen auf den zugewandten Flächen der beiden Substrate angeordnet sind, so dass die Kathoden (12) sich mit den Anoden (14) kreuzen, Elektronenemissionsquellen (15), die auf den Teilen der Kathoden an den Schnittstellen der Kathoden (12) und der Anoden (14) ausgebildet sind, so dass sie als Elektronenemissionsquellen dienen und ein Gate (13) zum Steuern der aus den Elektronenemissionsquellen emittierten Elektronen, worin das Gate (13) auf einer ganzen Fläche des hinteren Substrats (11) unter den Kathoden (12) angeordnet ist und eine Isolierschicht zur elektrischen Isolation zwischen den Gates (17) und den Kathoden ausgebildet ist, wobei das Verfahren den Schritt zum Steuern des zwischen den Kathoden (12) und den Anoden (14) fließenden Stroms durch Steuern der Gatespannung umfasst.

10. Verfahren nach Anspruch 9, worin die Elektronenemissionsquellen (15) aus mindestens einem Material ausgewählt aus der Gruppe bestehend aus Kohlenstoffnanoröhrchen, einem Metall, Diamant und Graphit auf den Kathoden an den Schnittstellen der Kathoden und dem Gate gebildet wird.

11. Verfahren nach Anspruch 9, worin die Elektronenemissionsquellen (15) aus einer Mischung aus einem leitfähigen Material, einem dielektrischen Material oder einen isolierenden Material und mindestens einem Material ausgewählt aus der Gruppe bestehend aus Kohlenstoffnanoröhrchen, einem Metall, Diamant und Graphit auf den Kathoden an den Schnittstellen der Kathoden und dem Gate gebildet werden.

12. Verfahren nach Anspruch 9, worin die Isolierschicht (17) in einer Decke oder linear entlang der Kathodenlinien gebildet wird.

13. Verfahren nach Anspruch 10, worin die Elektronenemissionsquellen (15) direkt auf der gesamten Fläche oder auf einer Kante der Kathoden an den Schnittstellen der Kathoden und Anoden gebildet werden.

14. Verfahren nach Anspruch 10, worin die Elektronenemissionsquellen (15) um mindestens einen in die Kathoden an den Schnittstellen der Kathoden und Anoden gestochenen Durchtritt gebildet werden.

15. Feldemissionsvorrichtung mit Triodenstruktur umfassend:
einen hinteres Substrat (11) und ein vorderes Substrat (20), die einander in einem bestimmten Spalt zugewandt sind;
Abstandhalter (16) zur Vakuumversiegelung des durch die beiden Substrate gebildeten Raums, während der Spalt zwischen den beiden Substraten beibehalten wird;
Kathoden (12) und Anoden (14) auf den zugewandten Flächen der beiden Substrate;
Elektronenemissionsquellen (15), die auf den Teilen der Kathoden an den Schnittstellen der Kathoden und der Anoden ausgebildet sind; und
Gates (13) zum Steuern der aus den Elektronenemissionsquellen emittierten Elektronen;
worin die Gates (13) in Streifen auf dem hinteren Substrat (11) unter den Kathoden (12) angeordnet sind, so dass sie die Kathoden (12) senkrecht kreuzen; und
eine Isolierschicht (17) zur elektrischen Isolierung zwischen den Gates und Kathoden ausgebildet ist.

16. Feldemissionsvorrichtung mit Triodenstruktur nach Anspruch 15, worin die Elektronenemissionsquellen (15) auf den Teilen der Kathoden an den Schnittstellen der Kathoden und Gates ausgebildet sind.

17. Feldemissionsvorrichtung mit Triodenstruktur nach Anspruch 15 oder 16, worin die Elektronenemissionsquellen (15) aus mindestens einem Material ausgewählt aus der Gruppe bestehend aus einem Metall, Diamant und Graphit und Kohlenstoffnanoröhrchen auf den Kathoden an den Schnittstellen der Kathoden und Gates gebildet sind.

18. Feldemissionsvorrichtung mit Triodenstruktur nach Anspruch 17, worin die Elektronenemissionsquellen (15) aus einer Mischung aus einem leitfähigen Material, einem dielektrischen Material oder einen isolierenden Material und mindestens einem Material ausgewählt aus der Gruppe bestehend aus Kohlenstoffnanoröhrchen, einem Metall, Diamant und Graphit auf den Kathoden an den Schnittstellen der Kathoden und Gates gebildet sind.

19. Feldemissionsvorrichtung mit Triodenstruktur nach Anspruch 18, worin die Elektronenemissionsquellen (15) direkt auf der gesamten Fläche oder auf einer Kante der Kathoden (12) an den Schnittstellen der Kathoden (12) und Gates gebildet sind.

20. Feldemissionsvorrichtung mit Triodenstruktur nach einem der Ansprüche 17 bis 19, worin die Elektronenemissionsquellen (15) nach einem Verfahren unter einem Druckverfahren, einem elektrophoretischen Verfahren und einem Aufdampfverfahren gebildet sind.

21. Verfahren zum Betreiben einer Feldemissionsvorrichtung mit Triodenstruktur enthaltend ein hinteres Substrat (11) und ein vorderes Substrat (20), die einander in einem bestimmten Spalt zugewandt sind, Abstandhalter (16) zur Vakuumversiegelung des durch die beiden Substrate gebildeten Raums, während der Spalt zwischen den beiden Substraten beibehalten wird, Kathoden (12) und Anoden (14), die auf den zugewandten Flächen der beiden Substrate angeordnet sind, Elektronenemissionsquellen (15), die auf den Teilen der Kathoden an den Schnittstellen der Kathoden (12) und der Anoden (14) ausgebildet sind, so dass sie als Elektronenemissionsquellen dienen und ein Gate (13) zum Steuern der aus den Elektronenemissionsquellen emittierten Elektronen, worin das Gate (13) in Streifen auf dem hinteren Substrat (11) unter den Kathoden (12) angeordnet ist, so dass es die Kathoden (12) senkrecht kreuzt, und eine Isolierschicht zur elektrischen Isolierung zwischen den Gates (17) und den Kathoden gebildet ist, wobei das Verfahren den Schritt zum Steuern des zwischen den Kathoden (12) und den Anoden (14) fließenden Stroms durch Steuern der Gatespannung umfasst.

22. Verfahren nach Anspruch 21, worin die Elektronenemissionsquellen (15) aus mindestens einem Material ausgewählt aus der Gruppe bestehend aus Kohlenstoffnanoröhrchen, einem Metall, Diamant und Graphit auf den Kathoden an den Schnittstellen der Kathoden und Gates gebildet wird.

23. Verfahren nach Anspruch 21, worin die Elektronenemissionsquellen (15) aus einer Mischung aus einem leitfähigen Material, einem dielektrischen Material oder einen isolierenden Material und mindestens einem Material ausgewählt aus der Gruppe bestehend aus Kohlenstoffnanoröhrchen, einem Metall, Diamant und Graphit auf den Kathoden an den Schnittstellen der Kathoden und Gates gebildet werden.

24. Verfahren nach Anspruch 22, worin die Isolierschicht (17) in einer Decke oder linear entlang der Kathodenlinien gebildet wird.

25. Verfahren nach Anspruch 22, 23 oder 24, worin die Elektronenemissionsquellen (15) direkt auf der gesamten Fläche oder auf einer Kante der Kathoden an den Schnittstellen der Kathoden und Gates gebildet werden.

26. Verfahren nach Anspruch 22, 23, 24 oder 25, worin die Elektronenemissionsquellen (15) um mindestens einen in die Kathoden an den Schnittstellen der Kathoden und Gates gestochenen Durchtritt gebildet werden.

## Revendications

1. Dispositif d'émission par effet de champ à triode comprenant :
un substrat arrière (11) et un substrat avant (20) qui se font face à un espacement prédéterminé ;
des séparateurs (16) pour fermer hermétiquement l'espace formé par les deux substrats (11, 20) tout en maintenant l'espacement entre les deux substrats ;
des cathodes (12) et des anodes (14) agencées en bandes sur les surfaces se faisant face des deux substrats de telle sorte que les cathodes croisent les anodes ;
des sources d'émission d'électrons (15) formées sur les portions des cathodes aux intersections des cathodes et des anodes ; et
une passerelle (13) pour contrôler les électrons émis par les sources d'émission d'électrons, dans lequel la passerelle (13) est agencée sur une surface entière du substrat arrière sous les cathodes (12) ; et
une couche isolante (17) pour l'isolation électrique est formée entre les passerelles et mes cathodes.

2. Dispositif d'émission par effet de champ à triode selon la revendication 1, dans lequel les sources d'émission d'électrons (15) sont formées d'au moins un matériau choisi parmi le groupe consistant en un métal, en diamant et en graphite, et de nanotubes en carbone sur les cathodes aux intersections des cathodes et des anodes.

3. Dispositif d'émission par effet de champ à triode selon la revendication 1 ou 2, dans lequel les sources d'émission d'électrons (15) sont formées d'un mélange d'un matériau conducteur, d'un matériau diélectrique ou d'un matériau isolant, et d'au moins un matériau choisi parmi le groupe consistant en nanotubes de carbone, en un métal, en diamant et en graphite, sur les cathodes, aux intersections des cathodes et des anodes.

4. Dispositif d'émission par effet de champ à triode selon la revendication 2, dans lequel les sources d'émission d'électrons (15) sont formées directement sur la surface entière ou sur un bord des cathodes (12) aux intersections des cathodes (12) et des anodes.

5. Dispositif d'émission par effet de champ à triode selon la revendication 2, dans lequel les sources d'émission d'électrons (15) sont formées autour d'au moins un trou percé dans les cathodes aux intersections des cathodes et des anodes.

6. Dispositif d'émission par effet de champ à triode selon la revendication 2, dans lequel les sources d'émission d'électrons (15) sont formées par un procédé choisi parmi un procédé d'impression, un procédé électrophorétique et un procédé de dépôt en phase vapeur.

7. Dispositif d'émission par effet de champ à triode selon la revendication 5, dans lequel, lorsque trois trous ou plus sont formés, un trou central est formé de la manière la plus grande possible, et un matériau à émission par effet de champ est formé autour de la circonférence extérieure de chacun des trous, de telle sorte que l'uniformité du courant d'émission au sein d'un pixel soit augmentée.

8. Dispositif d'émission par effet de champ à triode selon l'une quelconque des revendications précédentes, dans lequel la couche isolante (17) est formée dans une bande d'isolant ou est formée de manière linéaire le long des lignes des cathodes.

9. Procédé d'entraînement d'un dispositif d'émission par effet de champ à triode comprenant un substrat arrière (11) et un substrat avant (20) qui se font face à un espacement prédéterminé, des séparateurs (16) pour fermer hermétiquement l'espace formé par les deux substrats tout en maintenant l'espacement entre les deux substrats, des cathodes (12) et des anodes (14) agencées en bandes sur les surfaces se faisant face des deux substrats de telle sorte que les cathodes (12) croisent les anodes (14), des sources d'émission d'électrons (15) formées sur les portions des cathodes aux intersections des cathodes (12) et des anodes (14), afin de servir de sources d'émission d'électrons et une passerelle (13) pour contrôler les électrons émis par les sources d'émission d'électrons, dans lequel la passerelle (13) est agencée sur une surface entière du substrat arrière (11) sous les cathodes (12) et une couche isolante pour l'isolation électrique est formée entre les passerelles (17) et les cathodes, le procédé comprenant l'étape de contrôle du courant circulant entre les cathodes (12) et les anodes (14) en contrôlant la tension de la passerelle.

10. Procédé selon la revendication 9, dans lequel les sources d'émission d'électrons (15) sont formées d'au moins un matériau choisi parmi le groupe consistant en nanotubes de carbone, en un métal, en diamant et en graphite, sur les cathodes, aux intersections des cathodes et de la passerelle.

11. Procédé selon la revendication 9, dans lequel les sources d'émission d'électrons (15) sont formées d'un mélange d'un matériau conducteur, d'un matériau diélectrique ou d'un matériau isolant, et d'au moins un matériau choisi parmi le groupe consistant en nanotubes de carbone, en un métal, en diamant et en graphite, sur les cathodes, aux intersections des cathodes et de la passerelle.

12. Procédé selon la revendication 9, dans lequel la couche isolante (17) est formée dans une bande d'isolant ou est formée de manière linéaire le long des lignes des cathodes.

13. Procédé selon la revendication 10, dans lequel les sources d'émission d'électrons (15) sont formées directement sur la surface entière ou sur un bord des cathodes, aux intersections des cathodes et des anodes.

14. Procédé selon la revendication 10, dans lequel les sources d'émission d'électrons (15) sont formées autour d'au moins un trou percé dans les cathodes aux intersections des cathodes et des anodes.

15. Dispositif d'émission par effet de champ à triode comprenant :
un substrat arrière (11) et un substrat avant (20) qui se font face à un espacement prédéterminé ;
des séparateurs (16) pour fermer hermétiquement l'espace formé par les deux substrats tout en maintenant l'espacement entre les deux substrats ;
des cathodes (12) et des anodes (14) sur les surfaces se faisant face des deux substrats ;
des sources d'émission d'électrons (15) formées sur les portions des cathodes aux intersections des cathodes et des anodes ; et
des passerelles (13) pour contrôler les électrons émis par les sources d'émission d'électrons ;
dans lequel les passerelles (13) sont agencées en bandes sur le substrat arrière (11) sous les cathodes (12) afin de croiser perpendiculairement les cathodes (12) ; et
une couche isolante (17) pour l'isolation électrique est formée entre les passerelles et les cathodes.

16. Dispositif d'émission par effet de champ à triode selon la revendication 15, dans lequel les sources d'émission d'électrons (15) sont formées sur les portions des cathodes aux intersections des cathodes et des passerelles.

17. Dispositif d'émission par effet de champ à triode selon la revendication 15 ou 16, dans lequel les sources d'émission d'électrons (15) sont formées d'au moins un matériau choisi parmi le groupe consistant en un métal, en diamant et en graphite, et en nanotubes de carbone sur les cathodes, aux intersections des cathodes et des passerelles.

18. Dispositif d'émission par effet de champ à triode selon la revendication 17, dans lequel les sources d'émission d'électrons (15) sont formées d'un mélange d'un matériau conducteur, d'un matériau diélectrique ou d'un matériau isolant, et d'au moins un matériau choisi parmi le groupe consistant en nanotubes de carbone, en un métal, en diamant et en graphite, sur les cathodes, aux intersections des cathodes et des passerelles.

19. Dispositif d'émission par effet de champ à triode selon la revendication 18, dans lequel les sources d'émission d'électrons (15) sont formées directement sur la surface entière ou sur un bord des cathodes (12) aux intersections des cathodes (12) et des passerelles.

20. Dispositif d'émission par effet de champ à triode selon l'une quelconque des revendications 17 à 19, dans lequel les sources d'émission d'électrons (15) sont formées par un procédé choisi parmi un procédé d'impression, un procédé électrophorétique et un procédé de dépôt en phase vapeur.

21. Procédé d'entraînement d'un dispositif d'émission par effet de champ à triode comprenant un substrat arrière (11) et un substrat avant (20) qui se font face à un espacement prédéterminé, des séparateurs (16) pour fermer hermétiquement l'espace formé par les deux substrats tout en maintenant l'espacement entre les deux substrats, des cathodes (12) et des anodes (14) agencées en bandes sur les surfaces se faisant face des deux substrats, des sources d'émission d'électrons (15) formées sur les portions des cathodes aux intersections des cathodes (12) et des anodes (14), afin de servir de sources d'émission d'électrons, et une passerelle (13) pour contrôler les électrons émis par les sources d'émission d'électrons, dans lequel la passerelle (13) est agencée en bandes sur le substrat arrière (11) sous les cathodes (12) afin de croiser perpendiculairement les cathodes (12), et une couche isolante pour l'isolation électrique est formée entre les passerelles (17) et les cathodes, le procédé comprenant l'étape de contrôle du courant circulant entre les cathodes (12) et les anodes (14) en contrôlant la tension de la passerelle.

22. Procédé selon la revendication 21, dans lequel les sources d'émission d'électrons (15) sont formées d'au moins un matériau choisi parmi le groupe consistant en nanotubes de carbone, en un métal, en diamant et en graphite, sur les cathodes, aux intersections des cathodes et des passerelles.

23. Procédé selon la revendication 21, dans lequel les sources d'émission d'électrons (15) sont formées d'un mélange d'un matériau conducteur, d'un matériau diélectrique ou d'un matériau isolant, et d'au moins un matériau choisi parmi le groupe consistant en nanotubes de carbone, en un métal, en diamant et en graphite, sur les cathodes, aux intersections des cathodes et des passerelles.

24. Procédé selon la revendication 22, dans lequel la couche isolante (17) est formée dans une bande d'isolant ou est formée de manière linéaire le long des lignes des cathodes.

25. Procédé selon la revendication 22, 23 ou 24, dans lequel les sources d'émission d'électrons (15) sont formées directement sur la surface entière ou sur un bord des cathodes aux intersections des cathodes et des passerelles.

26. Procédé selon la revendication 22, 23, 24 ou 25, dans lequel les sources d'émission d'électrons (15) sont formées autour d'au moins un trou percé dans les cathodes aux intersections des cathodes et des passerelles.
